# EUROPEAN PATENT SPECIFICATION

(11) **EP 4 435 678 B1**
(45) Date of publication and mention of the grant of the patent: **26.08.2026**
(21) Application number: 22895176.0
(22) Date of filing: 19.08.2022
(51) Int. Cl.: G06F 18/28, G06V 10/774, G06N 3/045, G06N 3/08, G06N 20/00

(54) **MACHINE LEARNING METHOD, MACHINE LEARNING PROGRAM, MACHINE LEARNING DEVICE, AND INFORMATION PROCESSING DEVICE**
MASCHINENLERNVERFAHREN, MASCHINENLERNPROGRAMM, MASCHINENLERNVORRICHTUNG UND INFORMATIONSVERARBEITUNGSVORRICHTUNG
PROCÉDÉ D'APPRENTISSAGE AUTOMATIQUE, PROGRAMME D'APPRENTISSAGE AUTOMATIQUE, DISPOSITIF D'APPRENTISSAGE AUTOMATIQUE ET DISPOSITIF DE TRAITEMENT D'INFORMATIONS

(30) Priority: 18.11.2021 JP 2021187584
(43) Date of publication of application: 25.09.2024
(73) Proprietor: KONICA MINOLTA, INC., Tokyo 100-7015 (JP)
(72) Inventor: SASHIDA, Takehiko, Tokyo 100-7015 (JP)
(74) Representative: Hoffmann Eitle
(86) International application number: PCT/JP2022/031342
(87) International publication number: WO 2023/089888

(56) References cited:
- WO-A1-2020/070876
- WO-A1-2021/100267
- CN-A- 110 508 510
- CN-A- 112 001 878
- CN-B- 109 178 831
- WANG LIANGLIANG ET AL: "Three-stream CNNs for action recognition", PATTERN RECOGNITION LETTERS, ELSEVIER, AMSTERDAM, NL, vol. 92, 4 April 2017 (2017-04-04), pages 33 - 40, XP085023409, ISSN: 0167-8655, DOI: 10.1016/J.PATREC.2017.04.004

## Description

### Technical Field

The present invention relates to a machine learning method, a machine learning program, a machine learning apparatus, and an information processing apparatus.

### Background Art

In order to achieve object recognition accuracy equal to or higher than a certain level by machine learning such as deep learning, learning using a large amount of high-quality teacher data is generally required. For that purpose, as in Non Patent Literature 1, there is a method of increasing data while maintaining quality by setting a sampling rate in accordance with an analysis result.

In the method described in Non Patent Literature 1, in order to suppress a decrease in recognition accuracy due to a difference in pronunciation (conversation, reading, and speech), entropy is analyzed at a cycle of 15 msec, a sampling rate is set according to a result of the analysis, and training data for learning is generated.

### Citation List

### Non Patent Literature

Non Patent Literature 1: Amber Afshan, Jinxi Guo, Soo Jin Park, Vijay Ravi, Alan McCree, Abeer Alwan," Variable frame rate-based data augmentation to handle speaking-style variability for automatic speaker verification, Cornell University, Sat, 8 Aug 2020, the Internet (URL: https://arxiv.org/abs/2008.03616)).
Non-patent literature 2: WANG LIANGLIANG ET AL: "Threestream CNNs for action recognition",PATTERN RECOGNITION LETTERS, ELSEVIER, AMSTERDAM, NL, vol. 92, 4 April 2017 (2017-04-04), pages 33-40, XP085023409,ISSN: 0167-8655, DOI: 10.1016/J.PATREC.2017.04.004.
Non Patent Literature 2 describes a spatial-temporal three stream CNNs architecture, for action feature extraction. The threestream CNNs comprise of spatial, local temporal and global temporal streams generated respectively. It introduce a data augmentation scheme which has its origin in cropping across videos.
CN 109 178 831 B relates to the field of belt detection, and particularly describes a method for detecting longitudinal tearing of a belt conveyor. In detail, it describes steps of establishing a video key frame library including selecting the reference frame of the video image, and when reading the video image data, reading the current frame and reference frame into the memory of the host side of a processor, and binding them to the texture memory; calculating the mutual information entropy value of the two frames of images to obtain the difference between the current frame image and the reference frame image; and eliminating the initial redundant frame according to the mutual information entropy value and the determined standard deviation a of the mutual information entropy value.

### Summary of Invention

### Technical Problem

The technology described in Non Patent Literature 1 relates to audio data, and requires advanced interpolation processing as preprocessing.

The present invention has been devised in order to solve such a problem. In other words, it is an object of the present invention to provide a machine learning apparatus and a machine learning method that generate a learning model with improved robustness against a change in a condition in a sequence direction by simply generating learning data without requiring advanced preprocessing and performing learning using the learning data.

### Solution to Problem

The above problem to be addressed by the present invention is solved by the features of the independent claims. Advantageous embodiments are described in the dependent claims. The invention is set out in the appended claims.

According to the machine learning method and the machine learning apparatus of the present invention, by acquiring sequential data and performing preprocessing for size adjustment in a sequential direction on the sequential data based on a predetermined condition, a plurality of pieces of adjusted sequential data having different intervals in the sequential direction are generated from one piece of the sequential data, and supervised learning is performed using the plurality of generated pieces of adjusted sequential data to generate a learning model. Thus, a plurality of pieces of learning data with different intervals of sequential data are easily generated without requiring advanced preprocessing, and learning is performed using the learning data, so that a learning model with improved robustness against a change in a condition in the sequential direction can be generated.

### Brief Description of Drawings

Fig. 1 is a diagram illustrating a schematic configuration of an information processing apparatus according to an embodiment of the present invention.
Fig. 2 is a side view illustrating an example of a target object to be inspected by the information processing apparatus illustrated in Fig. 1.
Fig. 3 is a block diagram illustrating a configuration of the information processing apparatus.
Fig. 4 is a functional block diagram illustrating the flow of data in a machine learning apparatus implemented by a controller functioning.
Fig. 5 illustrates an example of sequential data.
Fig. 6 is a flowchart illustrating a machine learning process of the machine learning apparatus.
Fig. 7A is a subroutine flowchart illustrating a process of setting a size adjustment condition in step S53.
Fig. 7B is a subroutine flowchart illustrating a process of setting a size adjustment condition in step S53 in another example.
Fig. 8 illustrates an example of a plurality of pieces of adjusted sequential data generated by preprocessing.
Fig. 9 illustrates an example of adjusted sequential data generated under another size adjustment condition.
Fig. 10 is a schematic diagram illustrating a machine learning method using the adjusted sequential data.
Fig. 11 is a functional block diagram illustrating the flow of data in an inspection process of the information processing apparatus using a learning model generated by machine learning.
Fig. 12 is a flowchart illustrating the inspection process of the information processing apparatus.

### Description of Embodiments

Embodiments of the present invention will be described below with reference to the accompanying drawings. However, the scope of the present invention is not limited to the disclosed embodiments. Note that in the description of the drawings, the same elements are denoted by the same reference signs, and redundant description thereof will be omitted. In addition, dimensional ratios in the drawings are exaggerated for convenience of description and may be different from actual ratios.

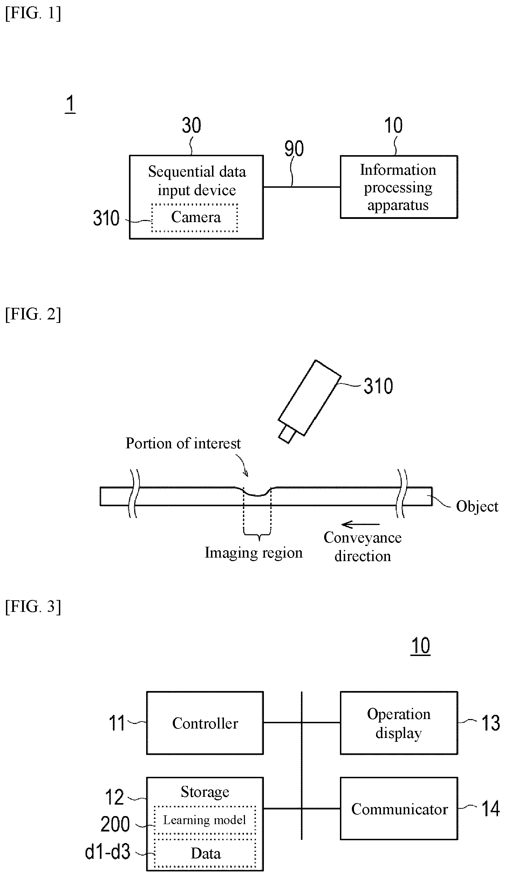

Fig. 1 is a diagram illustrating a schematic configuration of an inspection system 1 including an information processing apparatus according to the present embodiment.

The inspection system 1 includes a sequential data input device 30 and an information processing apparatus 10, which are communicably connected to each other via a network 90 such as a LAN. The sequential data input device 30 generates and inputs sequential data. The sequential data input device 30 includes a camera 310. The sequential data input device 30 includes, in addition to the camera 310, detection devices that are a three-dimensional distance measurement sensor such as a light detection and ranging (LiDar), a temperature sensor disposed in a factory or the like, a pressure sensor, and the like, and continuously perform observation and output detection data, and an HDD (hard disk drive) or the like that records sequential data obtained from these devices. The information processing apparatus 10 functions as a machine learning apparatus, performs machine learning using the sequential data from the sequential data input device 30, and generates a machine learning model.

### (Sequential Data)

The sequential data is a data group in which a plurality of pieces of data are arranged in accordance with predetermined order information. For example, imaging data (time-series image data) obtained by imaging by the camera 310, three-dimensional data in which two-dimensional image data is arranged based on information of a position in a direction perpendicular to the two dimensions, voice data in which voices uttered by a person are arranged in time series, distance measurement point group data obtained from the three-dimensional distance measurement sensor, and the like are present. The following description will be given taking, as an example, imaging data (a moving image) obtained by imaging by the camera 310 as sequential data.

Fig. 2 illustrates an example of a predetermined object to be inspected by the inspection system 1. In the example illustrated in Fig. 2, the object is a long sheet metal member, and is conveyed by a belt conveyor (not illustrated) from the right hand side to the left hand side along the conveyance direction in Fig. 2. In the present embodiment, the information processing apparatus 10 of the inspection system 1 extracts a defect (illustrated as a portion of interest in Fig. 2) in surface coating of the sheet metal member as a feature of the target (object), and outputs the result of the extraction. The object is not limited thereto, and may be a product itself such as a plurality of vehicles, or some of components for the product that are continuously conveyed by the belt conveyor. Furthermore, a shape feature (product failure, stockout, or the like) of the target may be extracted, and the result of the extraction may be output.

Fig. 3 is a block diagram illustrating a configuration of the information processing apparatus 10. The information processing apparatus 10 includes a controller 11, a storage 12, an operation display 13, and a communicator 14. These components are connected to each other via a signal line such as a bus for exchanging signals.

The controller 11 functions as the machine learning apparatus, includes a plurality of CPUs, a plurality of graphics processing units (GPUs), a RAM, a ROM, and the like, and controls each device and performs machine learning according to a program. The information processing apparatus 10 may be an on-premise server or a cloud server using a commercial cloud service. Some of functions of the information processing apparatus 10 (e.g., only the function of the machine learning apparatus) may be implemented by the cloud server.

The storage 12 includes a semiconductor memory that stores various programs and various data in advance, and a magnetic memory such as a hard disk. A machine learning model 200 (also referred to as a trained model) that is trained, generated, and updated by machine learning is stored in the storage 12. The storage 12 also stores the following three types of information d1 to d3, which are many pieces of sequential data (d1) generated by the sequential data input device 30, external information (d2), and a condition (d3) for extracting the portion of interest. Each piece of the sequential data (d1) is stored in association with a label (correct label). Here, the external information (d2) is information regarding an imaging environment, and is, for example, the sampling rate of the camera 310 or the number of frames (FPS), or the movement speed of the object, that is, the conveyance speed of the belt conveyor. Alternatively, it is the sampling rate in a case where the sequential data is audio data. The extraction condition (d3) is a rule set in advance. As a rule-based algorithm using this, for example, an image processing algorithm for detecting the portion of interest, such as pattern matching or edge detection processing, can be applied. The extraction condition (d3) or the algorithm using the extraction condition is used for a detection process of a detector 112 to be described later.

The operation display 13 is, for example, a touch screen display, displays various kinds of information, and receives various kinds of input from a user. The user can set the above-described imaging environment (external information) via the operation display 13. The assignment of a label to each piece of sequential data may be performed via the operation display 13, or may be performed by a pre-process of labeling using the rule-based algorithm or the machine learning model. The set or assigned information is stored in the storage 12.

The communicator 14 is an interface that transmits and receives data via the network. For example, communication based on a standard such as Ethernet, Bluetooth (registered trademark), or IEEE802.11 (WiFi) is performed.

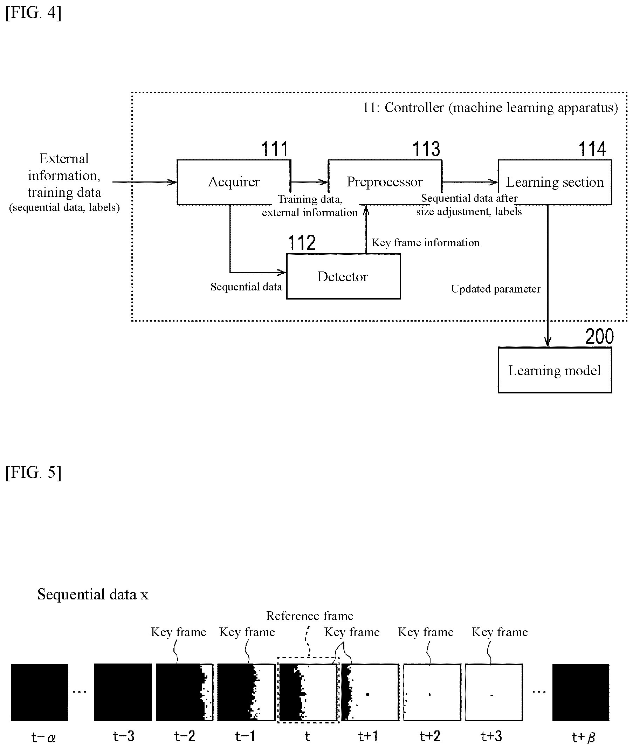

Fig. 4 is a functional block diagram illustrating the flow of data in the machine learning apparatus implemented by the controller 11 functioning. The controller 11 cooperates with the communicator 14 to function as an acquirer 111. Furthermore, the controller 11 functions as a detector 112, a preprocessor 113, and a learning section 114.

### (Acquirer 111)

The acquirer 111 acquires the external information and a plurality of pieces of training data from the sequential data input device 30 or the storage 12. The training data is composed of a plurality of pieces of sequential data and labels.

### (Detector 112)

The detector 112 receives the sequential data from the acquirer 111. Fig. 5 illustrates an example of the sequential data. The sequential data in this case is imaging data captured in a predetermined period (times t - α to t + β). For example, in a case where the data is 1-second moving image data captured by the camera 310 at 30, 60, or 120 FPS, one piece of sequential data includes 30, 60, or 120 frames (still images). The FPS can be set during the predetermined period as appropriate. The following description will be given assuming that one piece of sequential data includes 60 frames. The sequential data used as the training data is generated in advance by capturing an image of the object in which the portion of interest to be inspected (e.g., a defect of coating unevenness in a part) is present while the object is moved by the belt conveyor. In the example illustrated in Fig. 5, the portion of interest (coating unevenness) is illustrated in white for simplicity.

In addition, the detector 112 detects a frame (hereinafter, also referred to as a key frame) in which the portion of interest is included from among a plurality of frames constituting the sequential data based on the extraction condition (d3) set in advance. The detection result is transmitted to the preprocessor 113. For example, in the case of the sequential data is composed of 60 frames (1st to 60th), the frame number of the key frame is transmitted.

### (Preprocessor 113)

The preprocessor 113 adjusts the size of the sequential data in the sequence direction based on a predetermined condition to generate a plurality of pieces of adjusted sequential data having different intervals in the sequence direction. The predetermined condition includes the following predetermined conditions A1 to A3 (hereinafter, also collectively referred to as a predetermined condition A).

The predetermined condition A is (A1) a sampling rate or the number of frames, (A2) external information (e.g., the movement speed or a specification of the camera), and (A3) key frame information.

(A1) is information indicating the characteristics of the series data stored in advance in the storage 12, and is set by the user, for example. The external information (A2) is acquired from the sequential data input device 30. The key frame information (A3) is information of the number of key frames and/or the position of a reference frame (see below), and is determined based on the key frame information acquired from the detector 112.

Furthermore, the preprocessor 113 sets the reference frame from the sequential data. This reference frame is set from among the key frames detected by the detector 112. For example, in the example illustrated in Fig. 5, the key frame at the time t is set as the reference frame. The reference frame is set under a predetermined condition (hereinafter, also referred to as a predetermined condition B) set in advance. For example, as the predetermined condition B, there is a method in which, in a case where a plurality of key frames are detected, a central position of an arrangement of the key frames is set as the reference frame, or a method in which a time point (position) at which an edge (a boundary between black and white in the drawing) of the portion of interest reaches the vicinity of the center of the image is set as the reference frame.

The preprocessor 113 sets a size adjustment condition from the predetermined conditions A1 and A2. For example, in a case where the speed range of the movement of the target object is determined in advance in an inspection apparatus, the number of variations of images that can be generated within the speed range is increased (the number of types of adjusted sequential data is increased). Similarly, in accordance with the specifications of the camera, variations of images that can be generated within the speed range are increased so as to cover the frame rate. As another example, the number of frames in which the portion of interest is present in the imaging region (hereinafter, referred to as present frames and the number of present frames) is determined based on the size of the portion of interest (the size of the portion of interest with respect to the imaging region in the movement direction) and the movement speed from the predetermined conditions A1 and A2, the size adjustment is performed according to the number of frames to generate a plurality of pieces of adjusted sequential data. Note that in many cases, the number of present frames matches the number of key frames. For example, the preprocessor 113 performs size adjustment by extracting several frames before and after the reference frame, or performs size adjustment by one-frame thinning, two-frame thinning, or the like within the range of several frames before and after the reference frame.

Furthermore, only the present frames may be subjected to the size adjustment, or methods for the size adjustment before and after the reference frame in the arrangement direction of the sequential data may be different. In addition, as the size adjustment, interpolation processing or extrapolation processing may be performed in addition to the thinning processing. For example, when the number of present frames is equal to or less than a predetermined number, an intermediate frame is generated by interpolation using previous and subsequent frames. A specific example of the size adjustment will be described later.

### (Learning Section 114)

The learning section 114 performs machine learning by supervised learning using, as training data, a plurality of pieces of adjusted sequential data having different intervals in the sequential direction after the size adjustment and the labels assigned to the plurality of pieces of adjusted sequential data, and generates or updates the machine learning model 200. Here, one label assigned to one piece of sequential data is commonly applied to a plurality of pieces of adjusted sequential data generated based on the sequential data.

### (Machine Learning Process)

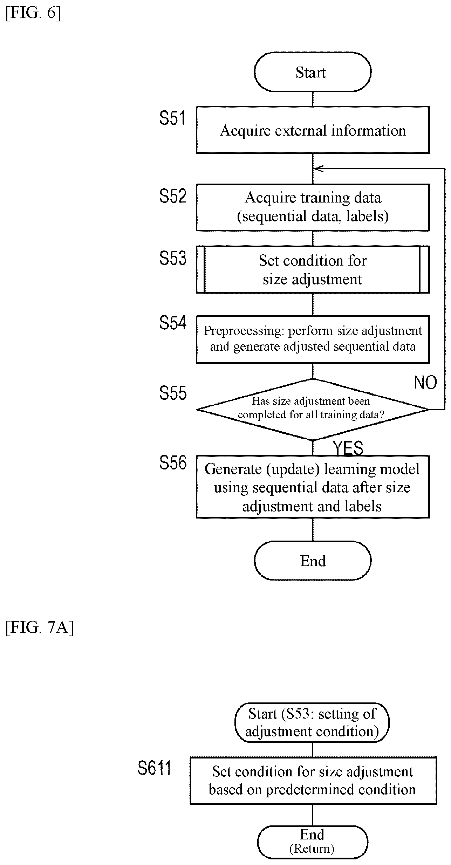

Hereinafter, a machine learning method according to the present embodiment will be described with reference to Figs. 6 to 11. In the present embodiment, a case will be described as an example where, in imaging data including 60 pieces of time-series image data as sequential data, the amount of each piece of data is reduced by thinning processing in the time direction as the size adjustment in the sequential direction.

Fig. 6 is a flowchart illustrating a machine learning process executed by the controller 11 functioning as the machine learning apparatus. In the process in Fig. 6, through processing from steps S51 to S55, a plurality of pieces of adjusted sequential data with different intervals are generated from each of a plurality of pieces of sequential data. Thus, the number of samples (the number of pieces of training data) is increased, and the respective data amounts are reduced. In step S56, a learning model is generated and updated by performing machine learning using the adjusted sequential data.

### (Step S51)

Here, the acquirer 111 of the controller 11 acquires external information. The external information is directly acquired from the sequential data input device as described above, or is set by the user via the operation display 13 and stored in the storage 12.

### (Step S52)

Here, the acquirer 111 acquires training data directly from the sequential data input device 30 or training data stored in the storage 12. The training data is composed of a plurality of pieces of sequential data, and a label is assigned to each of the pieces of sequential data.

### (Step S53)

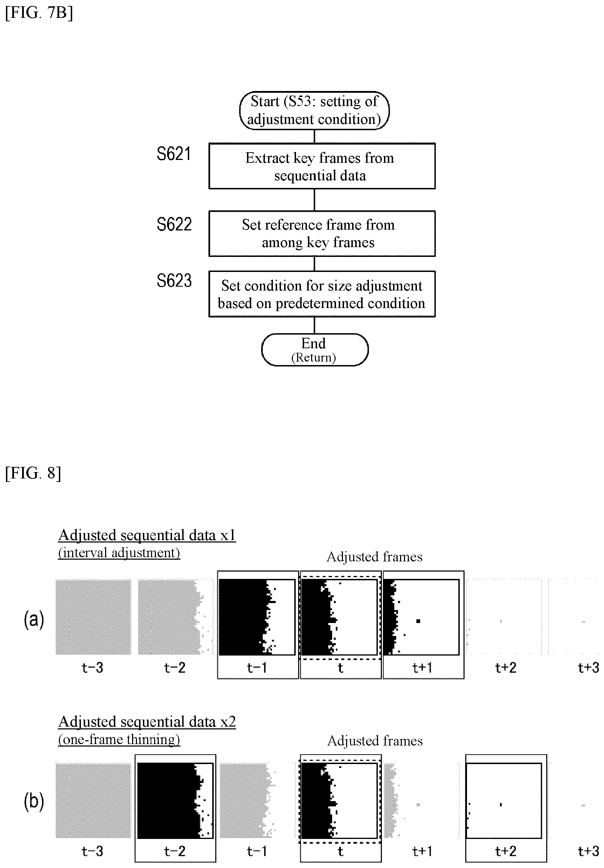

Here, the preprocessor 113 automatically sets a condition for the size adjustment alone or in cooperation with the detector 112. Fig. 7A is a subroutine flowchart illustrating a process of setting a size adjustment condition in step S53 in one example, and Fig. 7B is a subroutine flowchart illustrating a process of setting a size adjustment condition in step S53 in another example.

### (First Example)

### (Step S611)

As illustrated in Fig. 7A, the preprocessor 113 sets a plurality of size adjustment conditions based on the predetermined condition A. For example, the predetermined condition A is the number of frames constituting sequential data (predetermined condition A3). The greater the number of frames, the greater the thinning rate. For example, in a case where the number of frames is 30, for example, one- and two-frame thinning is set, and in a case where the number of frames is 60, one- to three-frame thinning is set. For example, in a case where the number of frames is 60 (0 to 59) and one-frame thinning is performed, the odd-numbered frames are deleted, and the even-numbered frames (0, 2, 4, 6,...) are used to halve the amount of data to generate the adjusted sequential data. In the case of the two-frame thinning, adjusted sequential data having an amount reduced to 1/3 is generated using every third frame (0, 3, 6, 9,...). Then, the process illustrated in Fig. 7A ends, and returns to the process illustrated in Fig. 6 (return).

### (Another Example)

### (Step S621)

In the other example illustrated in Fig. 7B, the detector 112 extracts key frames from the sequential data based on the extraction condition (d3).

### (Step S622)

Here, the preprocessor 113 sets a reference frame. This reference frame is set from among the key frames detected by the detector 112 in step S621. For example, in Fig. 5, the frame at the time t is set as the reference frame based on the above-described predetermined condition B.

### (Step S623)

The preprocessor 113 sets a plurality of size adjustment conditions based on a combination of the number of present frames determined based on the predetermined condition A1 or A2 and the predetermined condition A3 (key frame information), or only the predetermined condition A3 (see Fig. 8 described later). Then, the process illustrated in Fig. 7B ends, and returns to the process illustrated in Fig. 6 (return).

### (Step S54)

Refer to Fig. 6 again. Here, the preprocessor 113 performs the size adjustment based on the size adjustment condition set in step S53, and generates a plurality of pieces of adjusted sequential data having different intervals from one piece of the sequential data.

Fig. 8 illustrates an example of the plurality of pieces of adjusted sequential data generated by the preprocessing. Frames illustrated in Fig. 8 correspond to Fig. 5, and in Fig. 8, adjusted frames are surrounded by solid-line rectangular frames, and the other frames (i.e., the frames to be deleted) are expressed in light density (gray). As an adjustment condition set in step S623, frames in a predetermined continuous period (three frames in the drawing) within the range of the number of present frames centering on the reference frame (time t) surrounded by a broken-line rectangular frame are extracted from the adjusted sequential data x1 illustrated in Fig. 8(a) (frames at times t - 1, t, and t + 1).

Furthermore, from the adjusted sequential data x2 in Fig. 8(b), as another adjustment condition set in step S623, three frames are extracted by one-frame thinning with the reference frame as the center (times t - 2, t, and t + 2). Note that, in the example illustrated in Fig. 8, an example is illustrated in which the adjusted sequential data is composed of three frames as an example, but the present invention is not limited to this, and the adjusted sequential data may be composed of more than three frames. In addition, the adjusted sequential data may include only a present frame (or a key frame) in which the portion of interest is present in the imaging region, but may include a frame other than the present frame.

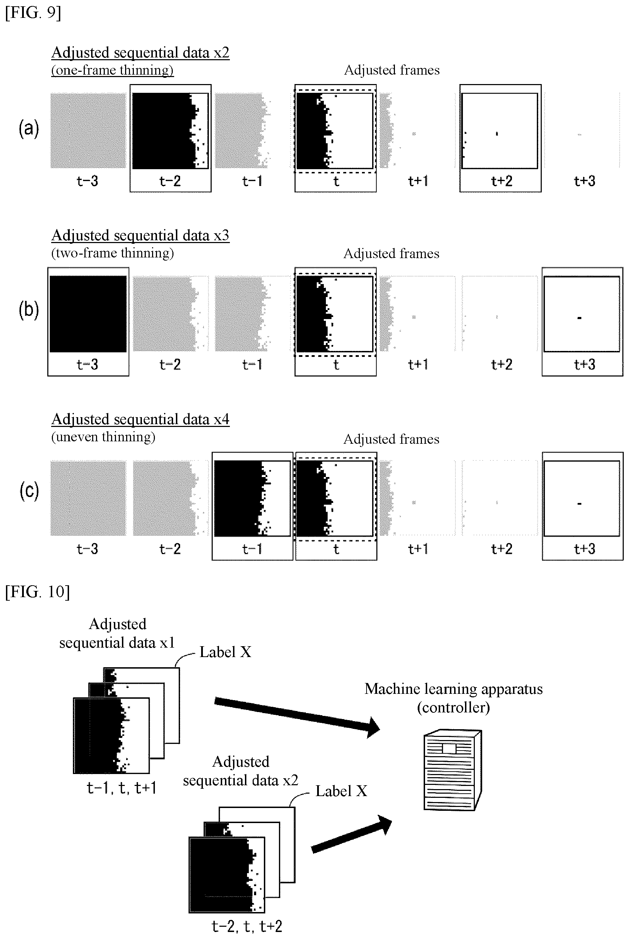

Fig. 9 illustrates an example of adjusted sequential data generated under another size adjustment condition. Fig. 9(a) illustrates adjusted sequential data generated by one-frame thinning centering on the reference frame (t), Fig. 9(b) illustrates adjusted sequential data generated by two-frame thinning centering on the reference frame (t), and Fig. 9(c) illustrates adjusted sequential data generated by a method (random thinning) in which methods for the adjustment are different before and after the reference frame (t). Specifically, in the example illustrated Fig. 9(c), the thinning rates are different before and after the reference frame. The adjustment conditions as illustrated in Fig. 9 may be combined with the adjustment conditions as illustrated in Fig. 8, or may be applied instead of Fig. 8.

### (Step S55)

When the size adjustment has not been completed for all the training data, the controller 11 returns the process to step S52 and repeats the subsequent processing. When the size adjustment for all data sets of the training data is completed, the process proceeds to step S56.

### (Step S56)

The controller11, which is a machine learning apparatus, reads the adjusted sequential data after sample adjustment and the labels as training data, and performs machine learning. Fig. 10 is a schematic diagram for explaining the machine learning method using the adjusted sequential data. By the processing up to step S55, the plurality of pieces of adjusted sequential data x1 and x2 are generated from one piece of sequential data x associated with a label X. Furthermore, the label X associated with the original sequential data x is commonly applied to the adjusted sequential data x1 and x2. Although Fig. 10 illustrates an example in which the two pieces of adjusted sequential data x1 and x2 are generated, three or more pieces of adjusted sequential data with different intervals may be generated and used for machine learning. For example, as illustrated in Figs. 8 and 9, four pieces of adjusted sequential data x1 to x4 whose intervals in the sequential direction are k may be generated.

By performing the same size adjustment on a large number of other sequential data, the size adjustment of the sequential data and the increase in the number of samples are performed. Then, the adjusted sequential data is input to a neural network as training data of the machine learning apparatus. Then, the machine learning apparatus (the controller 11) compares an estimation result of the neural network of the adjusted sequential data with the label, and adjusts a parameter from the comparison result. For example, by performing a process called back-propagation, the parameter is adjusted and updated so as to reduce an error in the comparison result. This is repeatedly performed on the target training data (adjusted sequential data), and the machine learning is advanced. When the machine learning using the target training data ends, the learning model 200 is stored in the storage 12, and the process ends (END).

Note that the machine learning method using the neural network formed by combining perceptrons has been described, but the present invention is not limited to this, and various methods can be adopted as long as they are supervised learning. For example, random forest, a support vector machine (SVM), boosting, a Bayesian (Bsysian) network linear discriminant method, a non-linear discriminant method, or the like can be applied.

As described above, the machine learning method or the machine learning apparatus according to the present embodiment acquires sequential data and a label, performs preprocessing for size adjustment in the sequence direction on the sequential data based on a predetermined condition, thereby generating a plurality of pieces of adjusted sequential data having different intervals in the sequence direction from one piece of the sequential data, performs supervised learning using the label and the plurality of pieces of adjusted sequential data generated by the preprocessor, and generates a learning model. Thus, a plurality of pieces of learning data with different intervals of sequential data are easily generated without requiring advanced preprocessing, and learning is performed using the learning data, so that a learning model with improved robustness against a change in a condition in the sequential direction can be generated.

For example, in a case where a learning model trained under a situation in which a manufactured product is moving on a belt conveyor in a production line of a certain factory is applied to a production line of another factory, it has been assumed that accuracy decreases unless machine learning is performed for each of belt conveyors having different speeds. Even in such a situation, by performing machine learning as in the present embodiment, learning is performed using a plurality of pieces of adjusted sequential data having different intervals by using sequential data obtained by an object moving by a belt conveyor at one speed, and thus it is possible to cope with various situations in which speeds are different by one learning model. In particular, the machine learning apparatus or the machine learning method according to the present embodiment can be preferably applied to generation of a learning model for extracting a feature of an object for which a movement speed or a motion itself is not a main parameter.

### (Inspection Process Using Learning Model)

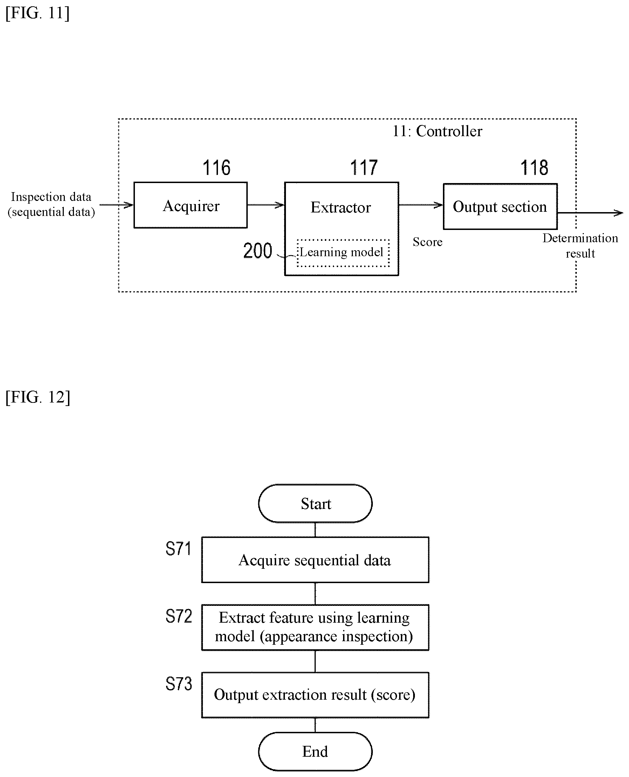

Hereinafter, an inspection process using the machine learning model 200 generated in the machine learning process illustrated in Fig. 6 will be described with reference to Figs. 11 and 12. Fig. 11 is a functional block diagram illustrating the flow of data in the inspection process of the information processing apparatus 10, and Fig. 12 is a flowchart illustrating the inspection process of the information processing apparatus 10.

As illustrated in Fig. 11, the controller 11 of the information processing apparatus 10 functions as an acquirer 116, an extractor 117, and an output section 118. The acquirer 116 has a function equivalent to that of the acquirer 111 and acquires, from the camera 310 of the sequential data input device 30, sequential data obtained by capturing an image of an object as illustrated in Fig. 2. The extractor 117 extracts a feature of the target (object) from the sequential data using the learning model 200. Further, the output section 118 outputs the extraction result.

### (Step S71)

The acquirer 116 acquires sequential data. In the example illustrated in Fig. 2, the captured image is transmitted from the camera 310 in real time, and is divided into sequential data for each predetermined period.

### (Step S72)

The extractor 117 develops the machine learning model 200 stored in the storage 12 and performs appearance inspection using it. The inspection result is output as a score.

### (Step 73)

The output section 118 outputs a determination result corresponding to the score. For example, a determination result of a defective or non-defective product is output to the operation display 13 or the like in accordance with the score of the object.

In this way, the information processing apparatus 10 according to the present embodiment extracts a feature from the sequential data including the object by using the learning model, and outputs the extraction result. Thus, a feature of the object, that is, whether the object is non-defective or defective can be determined with high accuracy.

The configurations of the machine learning apparatus and the information processing apparatus described above are merely main configurations for describing the features of the above-described embodiment, and can be modified in various manners without being limited to the above-described configurations and within the scope of the claims. In addition, a configuration included in a general machine learning apparatus or information processing apparatus is not excluded.

Furthermore, some of the steps in the above-described flowcharts may be omitted, and other steps may be added. In addition, the order of some of the steps may be changed or some of the steps may be executed at the same time, and one step may be divided into a plurality of steps and executed.

Furthermore, means and methods for performing the various kinds of processing in the information processing apparatus 10 described above can be implemented by any of a dedicated hardware circuit and a programmed computer. For example, the above-described program may be provided by a computer-readable recording medium such as a USB memory or a digital versatile disc (DVD)-ROM, or may be provided online via a network such as the Internet. In this case, the program recorded on the computer-readable recording medium is usually transferred to and stored in a storage such as a hard disk. In addition, the program may be provided as independent application software or may be incorporated into software of an apparatus as one function of the apparatus.

This application is based on Japanese Patent Application (Japanese Patent Application No. 2021-187584) filed on November 18, 2021.

### Reference Signs List

- 1: inspection system
- 10: information processing apparatus
- 11: controller (machine learning apparatus)
- 111: acquirer
- 112: detector
- 113: preprocessor
- 114: learning section
- 116: acquirer
- 117: extractor
- 118: output section
- 12: storage
- 13: operation display
- 14: communicator
- 200: learning model
- 30: sequential data input device
- 310: camera

## Claims

1. A computer-implemented machine learning method for generating a learning model for extracting a feature of a target, the machine learning method comprising:
(a) acquiring sequential data;
(b) performing preprocessing for size adjustment in a sequence direction on the sequential data based on a predetermined condition to generate a plurality of pieces of adjusted sequential data having different intervals in the sequence direction from one piece of the sequential data; and
(c) performing supervised learning using the plurality of pieces of adjusted sequential data generated in (b) to generate the learning model, wherein
the sequential data acquired in (a) is time-series image data obtained by imaging a target object in an imaging region, and
the learning model is a learning model for extracting a feature of the target object, further comprising
(d) acquiring external information regarding an imaging environment,
wherein in (b), a condition for the size adjustment is set as the predetermined condition based on the external information, wherein the external information is information regarding a movement speed of the object or a specification of a camera that captures an image of the imaging region, in particular the external information is information regarding the sampling rate of the camera or the number of frames, or the movement speed of the object.

2. The machine learning method according to claim 1, wherein
in (a), labels of the sequential data are acquired together with the sequential data, and
in (c), the supervised learning is performed by applying one of the labels of the sequential data to the plurality of pieces of adjusted sequential data.

3. The machine learning method according to claim 1 or 2, wherein in (b), a condition for the size adjustment is automatically set based on the predetermined condition.

4. The machine learning method according to claim 3, wherein in (b), a condition for the size adjustment is set as the predetermined condition in accordance with a sampling rate of the sequential data or the number of frames.

5. The machine learning method according to any one of claims 1 to 4, further comprising (e) analyzing the sequential data based on a predetermined condition and detecting, from among a plurality of frames constituting the sequential data, one or more key frames in which a portion of interest of the target object is present, wherein in (b), one reference frame is set from among the key frames detected in (e) and the size adjustment is performed with reference to the reference frame.

6. A machine learning apparatus that generates a learning model for extracting a feature of a target, the machine learning apparatus comprising:
an acquirer (111) that acquires sequential data;
a preprocessor (113) that performs preprocessing for size adjustment in a sequential direction on the sequential data based on a predetermined condition to generate a plurality of pieces of adjusted sequential data having different intervals in the sequential direction from one piece of the sequential data; and
a learning section (114) that performs supervised learning using the plurality of pieces of adjusted sequential data generated by the preprocessor to generate the learning model, wherein
the sequential data acquired by the acquirer is time-series image data obtained by imaging a target object in an imaging region, and
the learning model is a learning model for extracting a feature of the target object, wherein
the acquirer further acquires external information regarding an imaging environment, and
the preprocessor sets, as the predetermined condition, a condition for the size adjustment based on the external information, wherein the external information is information regarding a movement speed of the object or a specification of a camera that captures an image of the imaging region, in particular the external information is information regarding the sampling rate of the camera or the number of frames, or the movement speed of the object.

7. The machine learning apparatus according to claim 6, wherein
the acquirer acquires labels of the sequential data together with the sequential data, and
the learning section performs the supervised learning by applying one of the labels of the sequential data to the plurality of pieces of adjusted sequential data.

8. The machine learning apparatus according to claim 6 or 7, wherein the preprocessor automatically sets a condition for the size adjustment based on the predetermined condition.

9. The machine learning apparatus according to claim 6 to 8, wherein the preprocessor sets, as the predetermined condition, a condition for the size adjustment in accordance with a sampling rate of the sequential data or the number of frames.

10. The machine learning apparatus according to any one of claims 6 to 9, further comprising a detector (112) that analyzes the sequential data based on a predetermined condition and detects one or more key frames in which a portion of interest of the target object is present from among a plurality of frames constituting the sequential data, wherein the preprocessor sets one reference frame from among the key frames detected by the detector and performs the size adjustment with reference to the reference frame.

11. A machine learning program for causing a computer to execute the machine learning method according to any one of claims 1 to 5.

## Patentansprüche

1. Computerimplementiertes Maschinenlernverfahren zum Erzeugen eines Lernmodells zum Extrahieren eines Merkmals eines Ziels, das Maschinenlernverfahren umfassend:
(a) Erfassen von Sequenzdaten;
(b) Durchführen einer Vorverarbeitung zur Größenanpassung in einer Sequenzrichtung an den Sequenzdaten auf Grundlage von einer vorbestimmten Bedingung, um eine Vielzahl von Stücken von angepassten Sequenzdaten mit verschiedenen Intervallen in der Sequenzrichtung aus einem Stück der Sequenzdaten zu erzeugen; und
(c) Durchführen von überwachtem Lernen unter Verwendung von der Vielzahl von in (b) erzeugten Stücken von angepassten Sequenzdaten, um das Lernmodell zu erzeugen, wobei die in (a) erfassten Sequenzdaten Zeitreihenbilddaten sind, die durch Aufnehmen eines Zielobjekts in einem Aufnahmebereich erhalten werden, und
das Lernmodell ein Lernmodell zum Extrahieren eines Merkmals des Zielobjekts ist, weiter umfassend
(d) Erfassen von externer Information bezüglich einer Aufnahmeumgebung, wobei in (b) eine Bedingung für die Größenanpassung als die vorbestimmte Bedingung auf Grundlage von der externen Information festgelegt wird, wobei die externe Information Information bezüglich einer Bewegungsgeschwindigkeit des Objekts oder einer Spezifikation einer Kamera ist, die insbesondere ein Bild des Aufnahmebereichs aufnimmt, wobei die externe Information Information bezüglich der Abtastrate der Kamera oder der Anzahl von Frames oder der Bewegungsgeschwindigkeit des Objekts ist.

2. Maschinenlernverfahren nach Anspruch 1, wobei
in (a) Label der Sequenzdaten zusammen mit den Sequenzdaten erfasst werden, und
in (c) das überwachte Lernen durch Anwenden eines der Label der Sequenzdaten auf die Vielzahl von Stücken von angepassten Sequenzdaten durchgeführt wird.

3. Maschinenlernverfahren nach Anspruch 1 oder 2, wobei in (b) eine Bedingung für die Größenanpassung auf Grundlage von der vorbestimmten Bedingung automatisch festgelegt wird.

4. Maschinenlernverfahren nach Anspruch 3, wobei in (b) eine Bedingung für die Größenanpassung entsprechend einer Abtastrate der Sequenzdaten oder der Anzahl von Frames als die vorbestimmte Bedingung festgelegt wird.

5. Maschinenlernverfahren nach einem der Ansprüche 1 bis 4, weiter umfassend
(e) Analysieren der Sequenzdaten auf Grundlage von einer vorbestimmten Bedingung und
Detektieren eines oder mehrerer Schlüsselbilder, in denen ein Bereich von Interesse des Zielobjekts vorhanden ist, aus einer Vielzahl von Frames, die die Sequenzdaten bilden, wobei in (b) ein Referenzbild aus den in (e) detektierten Schlüsselbildern festgelegt wird und die Größenanpassung unter Bezugnahme auf das Referenzbild durchgeführt wird.

6. Maschinenlerneinrichtung, die ein Lernmodell zum Extrahieren eines Merkmals eines Ziels erzeugt, die Maschinenlerneinrichtung umfassend:
eine Erfassungseinheit (111), die Sequenzdaten erfasst;
eine Vorverarbeitungseinheit (113), die eine Vorverarbeitung zur Größenanpassung in einer Sequenzrichtung an den Sequenzdaten auf Grundlage von einer vorbestimmten Bedingung durchführt, um eine Vielzahl von Stücken von angepassten Sequenzdaten mit verschiedenen Intervallen in der Sequenzrichtung aus einem Stück der Sequenzdaten zu erzeugen; und
eine Lerneinheit (114), die überwachtes Lernen unter Verwendung der Vielzahl von Stücken von angepassten Sequenzdaten, die von der Vorverarbeitungseinheit erzeugt werden, durchführt, um das Lernmodell zu erzeugen, wobei
die von der Erfassungseinheit erfassten Sequenzdaten Zeitreihenbilddaten sind, die durch Aufnehmen eines Zielobjekts in einem Aufnahmebereich erhalten werden, und
das Lernmodell ein Lernmodell zum Extrahieren eines Merkmals des Zielobjekts ist, wobei die Erfassungseinheit weiter externe Information bezüglich einer Aufnahmeumgebung erfasst, und
die Vorverarbeitungseinheit als die vorbestimmte Bedingung eine Bedingung für die Größenanpassung auf Grundlage der externen Informationen festlegt, wobei die externe Information Information bezüglich einer Bewegungsgeschwindigkeit des Objekts oder einer Spezifikation einer Kamera ist, die insbesondere ein Bild des Aufnahmebereichs aufnimmt, wobei die externe Information die Information bezüglich der Abtastrate der Kamera oder der Anzahl von Frames oder der Bewegungsgeschwindigkeit des Objekts ist.

7. Maschinenlerneinrichtung nach Anspruch 6, wobei
die Erfassungseinheit Label der Sequenzdaten zusammen mit den Sequenzdaten erfasst, und
die Lerneinheit das überwachte Lernen durch Anwenden eines der Label der Sequenzdaten auf die Vielzahl von Stücken von angepassten Sequenzdaten durchführt.

8. Maschinenlerneinrichtung nach Anspruch 6 oder 7, wobei die Vorverarbeitungseinheit eine Bedingung für die Größenanpassung auf Grundlage von der vorbestimmten Bedingung automatisch festlegt.

9. Maschinenlerneinrichtung nach Anspruch 6 bis 8, wobei die Vorverarbeitungseinheit als die vorbestimmte Bedingung eine Bedingung für die Größenanpassung entsprechend einer Abtastrate der Sequenzdaten oder der Anzahl von Frames festlegt.

10. Maschinenlerneinrichtung nach einem der Ansprüche 6 bis 9, weiter umfassend einen Detektor (112), der die Sequenzdaten auf Grundlage einer vorbestimmten Bedingung analysiert und aus einer Vielzahl von Frames, die die Sequenzdaten bilden, ein oder mehrere Schlüsselbilder, in denen ein Bereich von Interesse des Zielobjekts vorhanden ist, detektiert,
wobei die Vorverarbeitungseinheit ein Referenzbild aus den von dem Detektor detektierten Schlüsselbildern festlegt und die Größenanpassung unter Bezugnahme auf das Referenzbild durchführt.

11. Maschinenlernprogramm zum Veranlassen eines Computers, das Maschinenlernverfahren nach einem der Ansprüche 1 bis 5 auszuführen.

## Revendications

1. Procédé d'apprentissage automatique mis en œuvre par ordinateur pour générer un modèle d'apprentissage destiné à extraire une caractéristique d'une cible, le procédé d'apprentissage automatique comprenant :
(a) l'acquisition de données séquentielles ;
(b) la réalisation d'un prétraitement pour un ajustement de taille dans une direction de la séquence sur les données séquentielles sur la base d'une condition prédéterminée pour générer une pluralité d'éléments de données séquentielles ajustées ayant des intervalles différents dans la direction de la séquence à partir d'un élément des données séquentielles ; et
(c) la réalisation d'un apprentissage supervisé utilisant la pluralité d'éléments de données séquentielles ajustées générées en (b) pour générer le modèle d'apprentissage, dans lequel les données séquentielles acquises en (a) sont des données d'images de série temporelle obtenues par imagerie d'un objet cible dans une région d'imagerie, et
le modèle d'apprentissage est un modèle d'apprentissage destiné à extraire une caractéristique de l'objet cible, comprenant en outre
(d) l'acquisition d'informations externes concernant un environnement d'imagerie, dans lequel, en (b), une condition pour l'ajustement de taille est définie comme étant la condition prédéterminée sur la base des informations externes,
dans lequel les informations externes sont des informations concernant une vitesse de déplacement de l'objet ou une spécification d'une caméra qui capture en particulier une image de la région d'imagerie, les informations externes sont des informations concernant la fréquence d'échantillonnage de la caméra ou le nombre de trames, ou la vitesse de déplacement de l'objet.

2. Procédé d'apprentissage automatique selon la revendication 1, dans lequel
en (a), des étiquettes des données séquentielles sont acquises conjointement avec les données séquentielles, et
en (c), l'apprentissage supervisé est réalisé par application de l'une des étiquettes des données séquentielles à la pluralité d'éléments de données séquentielles ajustées.

3. Procédé d'apprentissage automatique selon la revendication 1 ou la revendication 2, dans lequel, en (b), une condition pour l'ajustement de taille est automatiquement définie sur la base de la condition prédéterminée.

4. Procédé d'apprentissage automatique selon la revendication 3, dans lequel, en (b), une condition pour l'ajustement de taille est définie comme étant la condition prédéterminée conformément à une fréquence d'échantillonnage des données séquentielles ou au nombre de trames.

5. Procédé d'apprentissage automatique selon l'une quelconque des revendications 1 à 4, comprenant en outre (e) l'analyse des données séquentielles sur la base d'une condition prédéterminée, et la détection, parmi une pluralité de trames constituant les données séquentielles, d'une ou plusieurs trames clés dans lesquelles une portion d'intérêt de l'objet cible est présente, dans lequel, en (b), une trame de référence est définie parmi les trames clés détectées en (e) et l'ajustement de taille est réalisé par référence à la trame de référence.

6. Dispositif d'apprentissage automatique qui génère un modèle d'apprentissage destiné à extraire une caractéristique d'une cible, le dispositif d'apprentissage automatique comprenant :
une unité d'acquisition (111), qui acquiert des données séquentielles ;
un préprocesseur (113), qui réalise un prétraitement pour un ajustement de taille dans une direction séquentielle sur les données séquentielles sur la base d'une condition prédéterminée pour générer une pluralité d'éléments de données séquentielles ajustées ayant des intervalles différents dans la direction séquentielle à partir d'un élément des données séquentielles ; et
une section d'apprentissage (114), qui réalise un apprentissage supervisé utilisant la pluralité d'éléments de données séquentielles ajustées générées par le préprocesseur pour générer le modèle d'apprentissage, dans lequel
les données séquentielles acquises par l'unité d'acquisition sont des données d'images de série temporelle obtenues par imagerie d'un objet cible dans une région d'imagerie, et
le modèle d'apprentissage est un modèle d'apprentissage destiné à extraire une caractéristique de l'objet cible, dans lequel l'unité d'acquisition acquiert en outre des informations externes concernant un environnement d'imagerie, et
le préprocesseur définit, comme étant la condition prédéterminée, une condition pour l'ajustement de taille sur la base des informations externes, dans lequel les informations externes sont des informations concernant une vitesse de déplacement de l'objet ou une spécification d'une caméra, en particulier qui capture une image de la région d'imagerie, les informations externes sont les informations concernant la fréquence d'échantillonnage de la caméra ou le nombre de trames, ou la vitesse de déplacement de l'objet.

7. Dispositif d'apprentissage automatique selon la revendication 6, dans lequel
l'unité d'acquisition acquiert des étiquettes de données séquentielles conjointement avec les données séquentielles, et
la section d'apprentissage réalise l'apprentissage supervisé par application de l'une des étiquettes des données séquentielles à la pluralité d'éléments de données séquentielles ajustées.

8. Dispositif d'apprentissage automatique selon la revendication 6 ou la revendication 7, dans lequel le préprocesseur définit automatiquement une condition pour l'ajustement de taille sur la base de la condition prédéterminée.

9. Dispositif d'apprentissage automatique selon la revendication 6 à 8, dans lequel le préprocesseur définit, comme étant la condition prédéterminée, une condition pour l'ajustement de taille conformément à une fréquence d'échantillonnage des données séquentielles ou au nombre d'images.

10. Dispositif d'apprentissage automatique selon l'une quelconque des revendications 6 à 9, comprenant en outre un détecteur (112), qui analyse les données séquentielles sur la base d'une condition prédéterminée et qui détecte une ou plusieurs trames clés dans lesquelles une portion d'intérêt de l'objet cible est présente parmi une pluralité de trames constituant les données séquentielles,
dans lequel le préprocesseur définit une trame de référence parmi les trames clés détectées par le détecteur et réalise l'ajustement de taille par référence à la trame de référence.

11. Programme d'apprentissage automatique pour amener un ordinateur à mettre en œuvre le procédé d'apprentissage automatique selon l'une quelconque des revendications 1 à 5.
